# EUROPÄISCHE PATENTSCHRIFT

(11) **EP 0 497 785 B1**
(45) Veröffentlichungstag und Bekanntmachung des Hinweises auf die Patenterteilung: **23.11.1994**
(21) Anmeldenummer: 90913699.6
(22) Anmeldetag: 21.09.1990
(51) Int. Cl.: G11B 7/09

(54) **SPURREGELKREIS**
AUTOMATIC TRACK CONTROL
CIRCUIT DE REGULATION DE PISTES

(30) Priorität: 28.10.1989 DE 3936033
(43) Veröffentlichungstag der Anmeldung: 12.08.1992
(73) Patentinhaber: Deutsche Thomson-Brandt GmbH, 78003 Villingen-Schwenningen (DE)
(72) Erfinder: ZUCKER, Friedhelm, D-7733 Mönchweiler (DE); BÜCHLER, Christian, D-7730 Marbach (DE); SCHRÖDER, Heinz-Jörg, D-7730 Marbach (DE)
(86) Internationale Anmeldenummer: EP9001606
(87) Internationale Veröffentlichungsnummer: WO9106950

(56) Entgegenhaltungen:
- Patent abstracts of Japan, vol.9, N0. 314, (P-412) 10 Dec. 1985, & JP-A-60 1743441 (NEC HOME ELECTRONICS K.K.) 29 July 1985, whole doc.
- Patent abstract of Japan, vol. 9, No. 064 (P-343) 23 March 1985, & JP-A-59 198540 (ASAHI KOUGAKU KOGYO K.K.) 10 Nov. 1984, whole doc.
- Patent abstracts of Japan, vol. 13, No.19 (P-814) 18 January 1989 & JP-A-63 224034 (FUJITSU LTD.) 19 Sept. 1988, whole doc.

## Beschreibung

Die Erfindung betrifft einen Spurregelkreis für eine optische Abtastvorrichtung, wobei ein Lichtstrahl mittels des Spurregelkreises entlang den um eine Frequenz gewobbelten Datenspuren eines plattenförmigen Aufzeichnungsträgers geführt wird, mittels eines Fokusregelkreises auf den Aufzeichnungsträger fokussiert wird und wobei der Lichtstrahl vom Aufzeichnungsträger auf einen Vierquadrantenphotodetektor mit vier Photodioden reflektiert wird, deren Ausgangssignale in einem Additionsverstärker addiert werden, dessen Ausgang mit dem ersten Eingang eines Multiplizierers verbunden ist.

Aus der DE-PS 31 53 674 ist ein plattenförmiger Aufzeichnungsträger bekannt, dessen Datenspuren um eine Mittenfrequenz gewobbelt sind. Die Datenspuren haben daher einen sinusförmigen Verlauf. Der Vorteil dieser besonderen Form der Datenspuren besteht darin, daß sie zusätzliche Informationen, z.B. Positionsinformationen, tragen können.

Beim sogenannten Push-Pull-Verfahren wird z.B. der die Daten eines derartigen Aufzeichnungsträgers abtastende Lichtstrahl mittels eines Fokusregelkreises auf den Aufzeichnungsträger fokussiert und mittels eines Spurregelkreises entlang der um eine vorgegebene Frequenz gewobbelten Datenspuren geführt. Der die Datenspuren abtastende Lichtstrahl wird vom Aufzeichnungsträger auf einen Vierquadrantenphotodetektor reflektiert, der aus vier Photodioden A, B, C und D aufgebaut ist. Die Ausgangssignale der vier Photodioden A, B, C und D werden in einem Additionsverstärker addiert. Um das Spurfehlersignal, das Regelsignal für den Spurregelkreis, zu erzeugen, werden die Ausgangssignale der einen beiden nebeneinander liegenden Photodioden A und B den Additionseingängen eines ersten Differenzverstärkers zugeführt, während die Ausgangssignale der anderen beiden nebeneinander liegenden Photodioden C und D den Subtraktionseingängen des ersten Differenzverstärkers zugeführt werden. Das Regelsignal für den Fokusregelkreis, das sogenannte Fokusfehlersignal, wird am Ausgang eines zweiten Differenzverstärkers abgegriffen, dessen Additionseingängen die Ausgangssignale der einen beiden diagonal gegenüber Liegenden Photodioden A und C zugeführt werden, während die Ausgangssignale der anderen beiden diagonal gegenüberliegenden Photodioden B und D an den Subtraktionseingängen des zweiten Differenzverstärkers liegen.

Zur Kompensation unerwünschter Offsetspannungen, die im Photodetektor und in den Verstärkern auftreten, wird eine mittels eines Potentiometers einmal fest eingestellte Kompensationsspannung in den Spurregelkreis eingespeist.

Dieses Verfahren hat aber den Nachteil, daß eine Drift der Offsetspannungen z.B. infolge Alterung der Bauteile oder infolge Temperaturschwankungen unberücksichtigt bleibt. Um auch die Drift der Offsetspannungen zu kompensieren, müßte die Kompensationsspannung mittels des Potentiometers daher ständig neu eingestellt werden.

Aus der JP-A-59 198540 ist ein Spurregelkreis bekannt, dessen Aufbau nun beschrieben wird.

Die Ausgangsspannungen der einen beiden sich diagonal gegenüberliegenden Photodioden eines Vierquadrantenphotodetektors werden in einem ersten Addierer addiert, während die Ausgangsspannungen der anderen beiden sich diagonal gegenüberliegenden Photodioden des Vierquadrantenphotodetektors in einem zweiten Addierer addiert werden. Die Ausgangssignale des ersten und des zweiten Addierers werden in einem Subtrahierer voneinander subtrahiert und in einem dritten Addierer addiert. Die Differenz am Ausgang des Subtrahierers und die Summe am Ausgang des dritten Addierers werden in einem Multiplizierer miteinander multipliziert, an dessen Ausgang des Spurfehlersignal abnehmbar ist.

Es ist nun Aufgabe der Erfindung, in einem Spurregelkreis der eingangs genannten Art Offsetspannungen und ihre Drift z.B. infolge Alterung der Bauteile oder infolge von Temperaturschwankungen automatisch zu kompensieren.

Die Erfindung löst diese Aufgabe dadurch, daß die Ausgangssignale der einen beiden nebeneinander liegenden Photodioden den Additionseingängen und die Ausgangssignale der anderen beiden nebeneinander liegenden Photodioden den Subtraktionseingängen eines Differenzverstärkers zugeführt werden, daß der Ausgang des Differenzverstärkers mit dem zweiten Eingang des Multiplizierers und dem ersten Eingang einer Summationsstelle verbunden ist und daß der Ausgang des Multiplizierers mit dem zweiten Eingang der Summationsstelle verbunden ist, an deren Ausgang das Regelsignal für den Spurregelkreis abnehmbar ist.

Es zeigen
Figur 1 ein erstes Ausführungsbeispiel der Erfindung
Figur 2 ein Ausführungsbeispiel eines Multiplizierers.

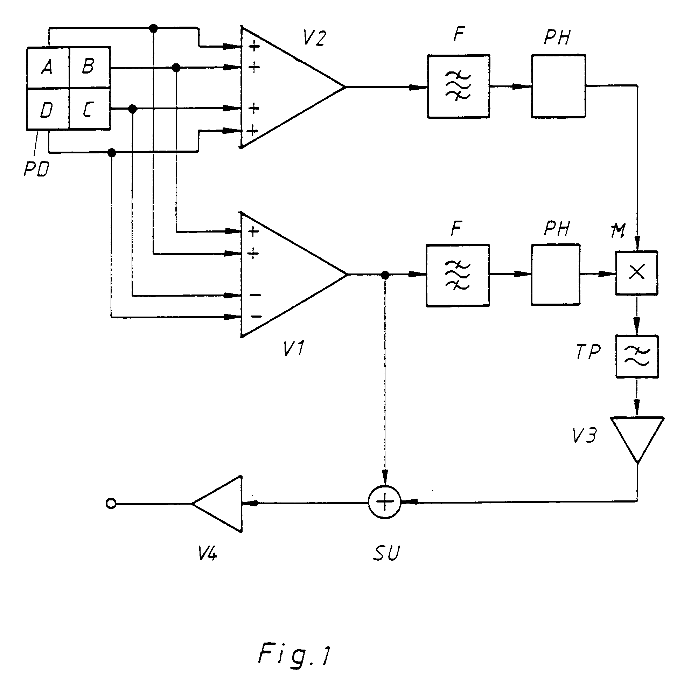

Anhand des in Figur 1 gezeigten Ausführungsbeispieles wird die Erfindung beschrieben und erläutert.

In der Figur 1 ist ein Vierquadrantenphotodetektor PD mit vier Photodioden A, B, C und D gezeigt. Die Ausgangssignale der einen beiden nebeneinander liegenden Photodioden A und B werden den Additionseingängen eines Differenzverstärkers V1 zugeführt, während die Ausgangssignale der anderen beiden nebeneinander liegenden Photodioden C und D an den Subtraktionseingängen des Differenzverstärkers V1 liegen. Die Ausgangssignale aller Photodioden A, B, C und D werden außerdem in einem Additionsverstärker V2 addiert. Der Ausgang des Additionsverstärkers V2 und des Differenzverstärkers V1 sind über je ein Filter F und einen Phasenschieber PH mit den beiden Eingängen eines Multipliziers M verbunden, dessen Ausgang über einen Tiefpaß TP und einen Verstärker V3 mit dem einen Eingang einer Summationsstelle SU verbunden ist. An den anderen Eingang der Summationsstelle SU ist der Ausgang des Differenzverstärkers V1 angeschlossen. Der Ausgang der Summationsstelle SU, an dem das kompensierte Spurfehlersignal anliegt, ist mit dem Regelverstärker V4 des Spurregelkreises verbunden.

Es ist auch möglich, den vom Aufzeichnungsträger reflektierten Lichtstrahl mittels eines Strahlteilers zu teilen und den einen Teil auf einen zweiten Photodetektor zu richten. Anstelle der im Additionsverstärker V2 gebildeten Summe aus den Ausgangssignalen der vier Photodioden A, B, C und D, kann auch das Ausgangssignal des zweiten Photodetektors dem Multiplizierer M zugeführt werden, weil es mit der Summe identisch ist.

Die Erfindung geht von der Erkenntnis aus, daß im Spurfehlersignal am Ausgang des Differenzverstärkers V1 die Frequenz enthalten ist, mit der die Datenspur des Aufzeichnungsträgers gewobbelt ist.

Die Filter F, deren Durchlaßbereich der Wobbelfrequenz der Datenspuren des Aufzeichnungsträgers entspricht, und die Phasenschieber PH sind zur Funktion der Erfindung nicht unbedingt erforderlich, jedoch verbessern sie die Kompensation der Offsetspannungen.

Das Signal am Ausgang des Verstärkers V3 wird als Offsetkompensationsspannung in den Spurregelkreis eingespeist. Es werden daher alle Offsetspannungen und deren Drift kompensiert, die z.B. infolge Alterung der Bauteile oder infolge von Temperaturschwankungen im Photodetektor PD und in den Verstärkern V1 und V2 verursacht wird.

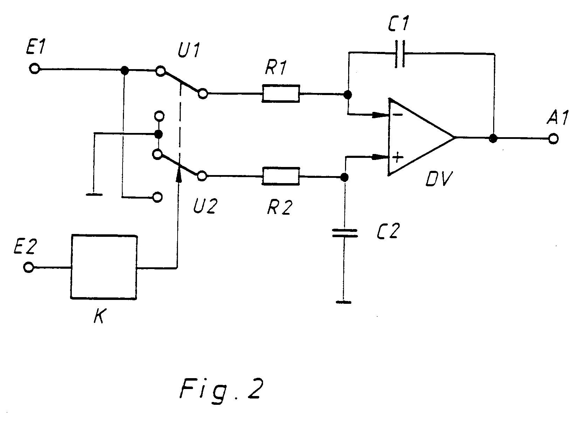

In der Figur 2 ist ein Auführungsbeispiel eines Multiplizierers M abgebildet.

Den einen Eingang E1 des Multiplizierers M, an dem das Ausgangssignal des Additionsverstärkers V2 anliegt, bilden die miteinander verbundenen ersten Eingänge zweier gemeinsam steuerbarer Umschalter U1 und U2, deren zweiten Eingänge auf Bezugspotential liegen. Den zweiten Eingang E2 des Multiplizierers M, dem das Spurfehlersignal am Ausgang des Differenzverstärkers V1 zugeführt wird, bildet der Eingang eines Vergleichers K oder Begrenzers, dessen Ausgang mit den Steuereingängen der beiden Umschalter U1 und U2 verbunden ist. Der Ausgang des einen Umschalters U1 ist über einen Widerstand R1 mit dem invertierenden Eingang eines Differenzverstärkers DV verbunden. Der Ausgang des anderen Umschalters U2 ist über einen Widerstand R2 mit den nichtinvertierenden Eingang des Differenzverstärkers DV verbunden, der über eine Kapazität C2 auf Bezugspotential liegt. Der Ausgang des Differenzverstärkers DV, der den Ausgang A1 des Multiplizierers M bildet, ist über eine Kapazität C1 auf den invertierenden Eingang zurückgekoppelt.

Der Vergleicher K wandelt das infolge der gewobbelten Datenspur sinusförmige Signal am Ausgang des Differenzverstärkers V1 in ein rechteckförmiges Signal um. Die beiden steuerbaren Umschalter U1 und U2 werden deshalb vom Vergleicher K mit der Frequenz des sinusförmigen Signals am Ausgang des Differenzverstärkers V1 umgeschaltet. Der Differenzverstärker DV integriert das Signal am Ausgang des Additionsverstärkers V2 in Abhängigkeit von der Stellung der beiden Umschalter U1 und U2 entweder in der einen oder in der anderen Richtung.

Die Erfindung ist für den Spurregelkreis einer optischen Abtastvorrichtung geeignet, die einen optischen Aufzeichnungsträger abtastet, dessen Datenspuren um eine Frequenz gewobbelt sind.

## Patentansprüche

1. Spurregelkreis für eine optische Abtastvorrichtung, wobei ein Lichtstrahl mittels des Spurregelkreises entlang den um eine Frequenz gewobbelten Datenspuren eines plattenförmigen Aufzeichnungsträgers geführt wird, mittels eines Fokusregelkreises auf den Aufzeichnungsträger fokussiert wird und wobei der Lichtstrahl vom Aufzeichnungsträger auf einen Vierquadrantenphotodetektor (PD) mit vier Photodioden (A, B, C, D) reflektiert wird, deren Ausgangssignale in einem Additionsverstärker (V2) addiert werden, dessen Ausgang mit dem ersten Eingang eines Multiplizierers (M) verbunden ist, **dadurch gekennzeichnet**, daß die Ausgangssignale der einen beiden nebeneinander liegenden Photodioden (A, B) den Additionseingängen und die Ausgangssignale der anderen beiden nebeneinander liegenden Photodioden (C, D) den Subtraktionseingängen eines Differenzverstärkers (V1) zugeführt werden, daß der Ausgang des Differenzverstärkers (V1) mit dem zweiten Eingang des Multiplizierers (M) und dem ersten Eingang einer Summationsstelle (SU) verbunden ist und daß der Ausgang des Multiplizierers (M) mit dem zweiten Eingang der Summationsstelle (SU) verbunden ist, an deren Ausgang das Regelsignal für den Spurregelkreis abnehmbar ist.

2. Spurregelkreis nach Anspruch 1, **dadurch** **ge****kennzeichnet**, daß zwischen dem Ausgang des Multiplizierers (M) und dem zweiten Eingang der Summationsstelle (SU) ein Tiefpass (TP) liegt.

3. Spurregelkreis nach Anspruch 1 oder 2, **dadurch** **ge****kennzeichnet**, daß sowohl zwischen dem Additionsverstärker (V2) und dem Multiplizierer (M) als auch zwischen dem Differenzverstärker (V1) und dem Multiplizierer (M) ein Filter (F) liegt.

4. Spurregelkreis nach Anspruch 1, 2 oder 3, **dadurch** **gekennzeichnet**, daß in mindestens einem Zweig, der von einem Verstärker (V1, V2) zum Multiplizierer (M) führt, ein Phasenschieber (PH) vorgesehen ist.

5. Spurregelkreis nach Anspruch 1, 2, 3 oder 4, **dadurch** **gekennzeichnet**, daß die miteinander verbundenen ersten Eingänge eines ersten und zweiten steuerbaren Umschalters (U1, U2) den ersten Eingang (E1) des Multiplizierers (M) bilden, dem das Ausgangssignal des Additionsverstärkers (V2) zugeführt wird, daß die zweiten Eingänge der beiden steuerbaren Umschalter (U1, U2) auf Bezugspotential liegen, daß der Eingang eines Vergleichers oder Begrenzers (K), dessen Ausgang mit den Steuereingängen der beiden Umschalter (U1, U2) verbunden ist, den zweiten Eingang (E2) des Multiplizierers (M) bildet, daß der Ausgang des ersten Umschalters (U1) über einen ersten Widerstand (R1) mit dem invertierenden Eingang eines Differenzverstärkers (DV) verbunden ist, daß der Ausgang des zweiten Umschalters (U2) über einen zweiten Widerstand (R2) mit dem nichtinvertierenden Eingang des Differenzverstärkers (DV) verbunden ist, der über eine erste Kapazität (C2) auf Bezugspotential liegt, und daß der Ausgang des Differenzverstärkers (DV), der den Ausgang (A1) des Multiplizierers (M) bildet, über eine zweite Kapazität (C1) auf den invertierenden Eingang zurückgekoppelt ist.

## Claims

1. Track control circuit for an optical scanning device, whereby a light beam is guided by a track control circuit along the data tracks of a record-shaped information medium, which are wobbled about a frequency, and is focused by means of a focus control circuit on to the information medium, and whereby the light beam is reflected from the information medium to a four-quadrant-photodetector (PD) with four photo diodes (A, B, C, D) the output signals of which are added in an adding amplifier (V2), whose output is connected with the first input of a multiplier (M), **characterized** **in** that the output signals of the two next to each other positioned photodiodes (A, B) of the photodetector (PD) are fed to the adding inputs and the output signals of the other two next to each other positioned photodiodes (C, D) are fed to the subtracting inputs of a difference amplifier (V1), that the output of the difference amplifier (V1) is connected with the second input of the multiplier (M) and with the first input of a summing point (SU) and that the output of the multiplier (M) is connected with the second input of the summing point (SU) at the output of which the control signal for the track control circuit can be taken from.

2. Track control circuit according to claim 1, **characterized** **in** that a low pass filter (TP) is arranged between the output of the multiplier (M) and the second input of the summing point (SU).

3. Track control circuit according to claims 1 or 2, **cha****racterized in** that a filter (F) is arranged as well between the adding amplifier (V2) and the multiplier (M) as also between the difference amplifier (V1) and the multiplier (M).

4. Track control circuit according to claims 1, 2 or 3, **characterized** **in** that at least in one branch leading from one amplifier (V1, V2) to the multiptier (M) a phase shifter (PH) is provided.

5. Track control circuit according to claims 1, 2, 3 or 4, **characterized** **in** that the interconnected first inputs of a first and a second controllable change-over switch (U1, U2) form the first input (E1) of the multiplier (M), which is supplied with the output signal of the adding amplifier (V2), that the second inputs of the two controllable change-over switches (U1, U2) are at reference potential, that the input of a comparator or limiter (K), whose output is connected with the control inputs of the two change-over switches (U1, U2), forms the second input (E2) of the multiplier (M), that the output of the first change-over switch (U1) is connected via a first resistor (R1) with the inverting input of a difference amplifier (DV), that the output of the second change-over switch (U2) is connected via a second resistor (R2) with the non-inverting input of the difference amplifier (DV), which is connected with reference potential via a first capacity (C2), and that the output of the difference amplifier (DV), which forms the output (A1) of the multiplier (M), is fed back to the inverting input via a second capacity (C1).

## Revendications

1. Circuit de régulation de pistes pour un dispositif de balayage optique, un faisceau lumineux étant guidé au moyen du circuit de régulation de pistes le long de pistes de données wobbulées autour d'une fréquence d'un support d'enregistrement en forme de disque, focalisé sur le support d'enregistrement au moyen d'un circuit-régulateur de focalisation et le faisceau lumineux étant réfléchi par le support d'enregistrement sur un photodétecteur (PD) à quatre quadrants et avec quatre photodiodes (A, B, C, D), dont les signaux de sortie sont additionnés dans un amplificateur-additionneur (A2) dont la sortie est reliée à la première entrée d'un multiplicateur (M), **caractérisé** **en** **ce** **que** les signaux de sortie de l'une des paires de photodiodes adjacentes (A, B) sont dirigés vers les entrées d'addition et que les signaux de sortie des deux autres photodiodes adjacentes (C, D) sont dirigés vers les entrées de soustraction d'un amplificateur différentiel (A1), que la sortie de l'amplificateur différentiel (A1) est reliée à la deuxième entrée d'un multiplicateur (M) et la première entrée d'un additionneur (Ad) et que la sortie du multiplicateur (M) est reliée la deuxième entrée de l'additionneur (Ad) à la sortie duquel est prélevé le signal de régulation pour le circuit de régulation de pistes.

2. Circuit de régulation de pistes selon revendication 1 **caractérisé** **en** **ce** **que** entre la sortie du multiplicateur (M) et la deuxième entrée d'un additionneur (Ad) se trouve un filtre passe-bas (PB).

3. Circuit de régulation de pistes selon revendications 1 ou 2, **caractérisé** **en** **ce** **que** un filtre (F) se trouve tant entre l'amplificateur d'addition (A2) et le multiplicateur (M) qu'entre l'amplificateur differentiel (A1) et le multiplicateur (M).

4. Circuit de régulation de pistes selon revendications 2, 3 ou 4, **caractérisé** **en** **ce** **que** dans au moins l'une des branches menant de l'un des amplificateurs (A1, A2) au multiplicateur (M), un décaleur de phases (PH) est prévu.

5. Circuit de régulation de pistes selon revendications 1, 2, 3 ou 4, **caractérisé** **en** **ce** **que** les premières entrées d'un premier et d'un second commutateur pilotable (U1, U2) forment la première entrée (E1) du multiplicateur (M) auquel est dirigé le signal de sortie de l'amplificateur d'addition (A2), que les deuxièmes entrées des deux commutateurs pilotables (U1, U2) sont appliquées au potentiel de référence, que l'entrée d'un comparateur ou d'un limitateur (K) dont la sortie est reliée aux entrées de pilotage des deux commutateurs (U1, U2) forme la deuxième entrée (E2) du multiplicateur (M), que la sortie du premier commutateur (U1) est reliée par le biais d'une première résistance (R1) avec l'entrée inverseur d'un amplificateur différentiel (AD), que la sortie du second commutateur (U2) est reliée au moyen d'une deuxième résistance (R2) à l'entrée non-inverseur de l'amplificateur différentiel (AD) appliqué au potentiel de référence par le biais d'un premier condensateur (C2) et que la sortie de l'amplificateur différentiel (AD) formant la sortie (S1) du multiplicateur (M) est réappliquée à l'entrée inverseur par le biais d'un second condensateur (C1).
